# EUROPEAN PATENT APPLICATION

(11) **EP 1 752 337 A1**
(43) Date of publication of application: **14.02.2007**
(21) Application number: 05017660.1
(22) Date of filing: 12.08.2005
(51) Int. Cl.: B60Q 7/00

(54) **Illuminated warning triangle**

(71) Applicant: Chao, Wen-Hsin, He Mei Chen Changhua-Hsien (TW); Fu, Chin-Ho, He Mei Chen Changhua Hsien (TW)
(72) Inventor: Chao, Wen-Hsin, He Mei Chen Changhua-Hsien (TW); Fu, Chin-Ho, He Mei Chen Changhua Hsien (TW)
(74) Representative: Panten, Kirsten

(57) **Abstract**

A warning device includes a triangular board (1), at least one fixing seat (2) mounted on a bottom of the triangular board, and a light emitting unit (3) mounted on the triangular board to emit light outward from the triangular board. Thus, the light emitting members (300) of the light emitting body (30) emit light outward from the triangular board to provide an optical warning effect. In addition, the circuit board (3 1) drives the light emitting members of the light emitting body to blink successively by provision of the counter (310), thereby enhancing the warning effect.

## Description

The present invention relates to a warning device, and more particularly to a warning device for a wheeled vehicle, such as a car or the like.

A conventional triangular warning board is provided for use with a wheeled vehicle, such as a car or the like. The triangular warning board has an optical reflective effect when the light from other car is projected onto the triangular warning board. Thus, when the car breaks down, the triangular warning board is taken out and placed on the ground to provide a warning effect. However, the triangular warning board is placed an the ground, so that the optical reflective effect is weaker, thereby decreasing the warning effect. In addition, the triangular warning board is placed an the ground, so that the triangular warning board is easily upset due to vibration or a wind blow.

Object of the present invention is to provide a warning device with an enhanced warning effect.

In accordance with the present invention, there is provided a warning device, comprising a triangular board, at least one fixing seat mounted an a bottom of the triangular board, and a light emitting unit mounted on the triangular board to emit light outward from the triangular board.

The light emitting members of the light emitting body emit light outward from the triangular board to provide an optical warning effect.

Preferably the warning device can blink successively. A circuit board preferably drives the light emitting members of the light emitting body to blink successively by provision of the counter of the circuit board, thereby enhancing the warning effect.

Further preferred is a warning device, wherein the reflective hood and the light permeable plate provide an optical diffusion effect to reflect the light source from the light emitting body so as to increase the warning distance of the warning device.

The triangular board also may be attached to the trunk or roof of the car by the attractive force of the permanent magnet, so that the warning device is located at an outstanding position, thereby enhancing the warning effect.

Further benefits and advantages of the present invention will become apparent after a careful reading of the detailed description with appropriate reference to the accompanying drawings.

In the drawings:
Fig. 1 is a perspective view of a warning device in accordance with the preferred embodiment of the present invention.
Fig. 2 is an exploded perspective view of the warning device as shown in Fig. 1.
Fig. 3 is a front plan view of the warning device as shown in Fig. 1.
Fig. 4 is a circuit diagram of the warning device as shown in Fig. 1.
Fig. 5 is a locally cross-sectional view of the warning device as shown in Fig. 1.
Fig. 6 is a locally cross-sectional view of the warning device as shown in Fig. 1.
Fig. 7 is a schematic operational view of the warning device as 10 shown in Fig. 1 in use.

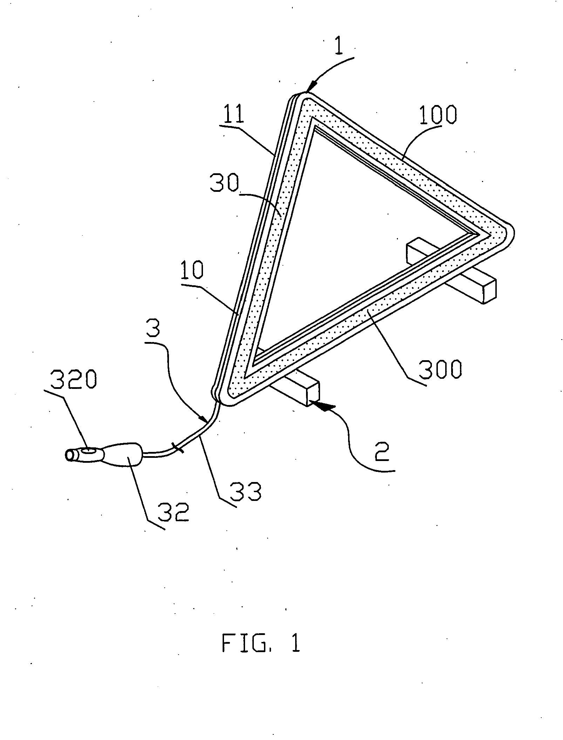

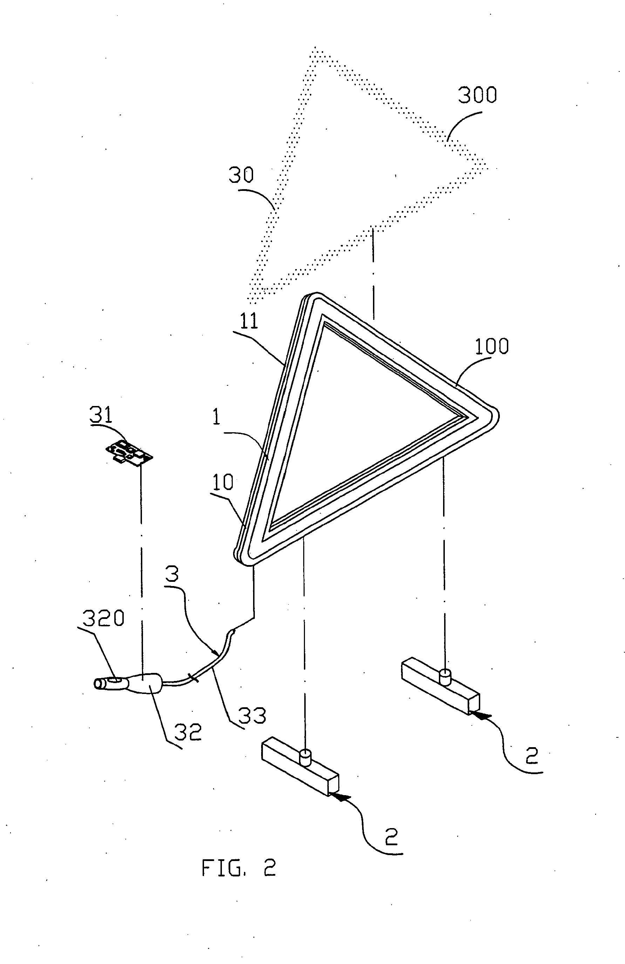

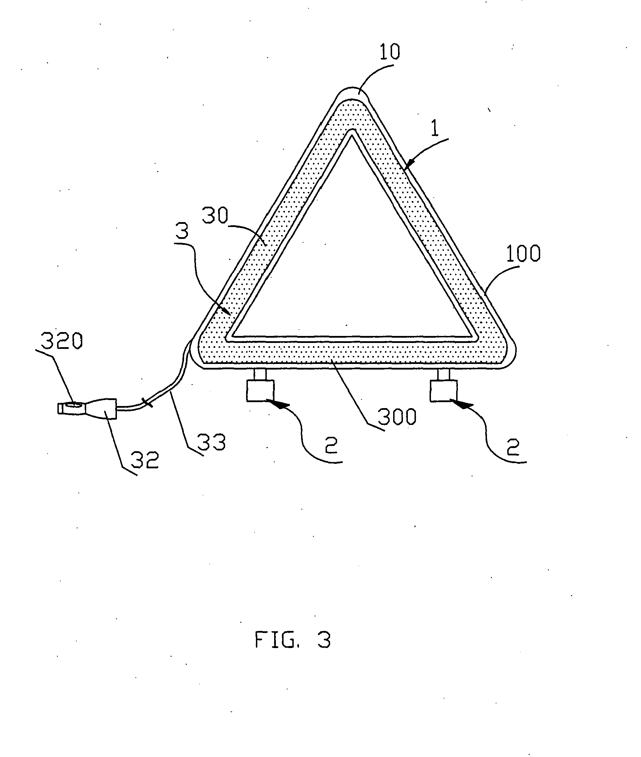

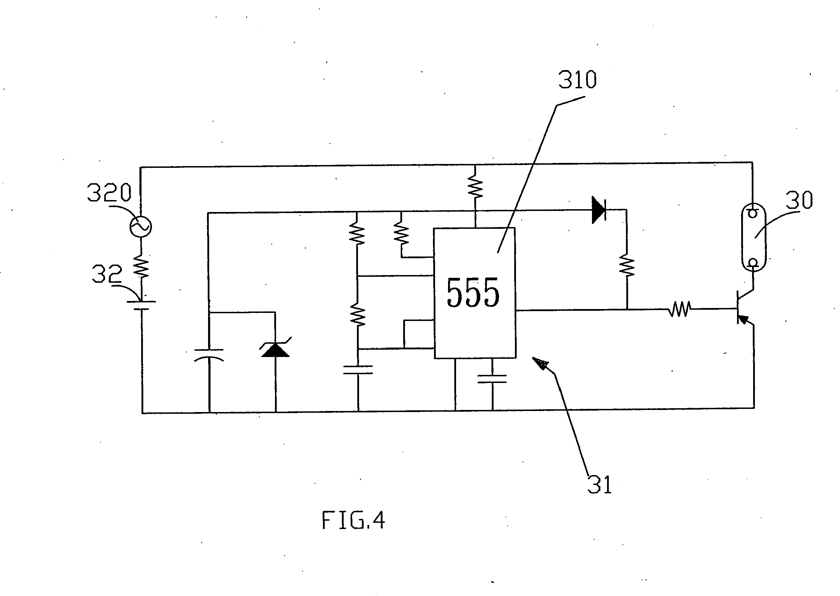

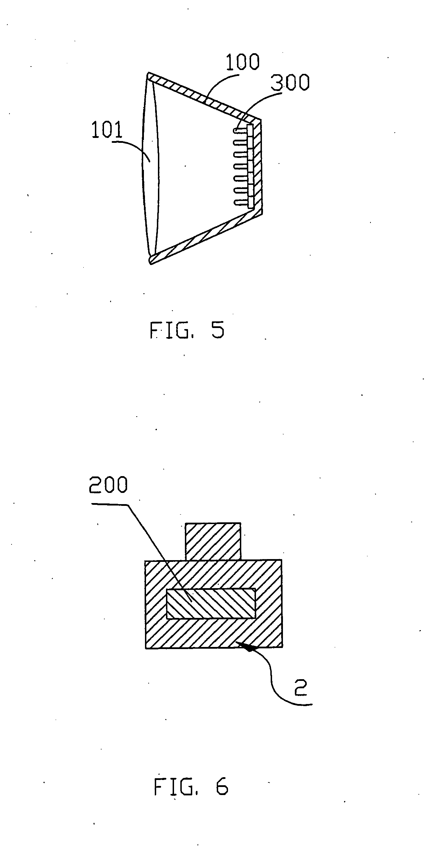

Referring to the drawings and initially to Figs. 1-6, a warning device in accordance with the preferred embodiment of the present invention comprises a triangular board 1, at least one fixing seat 2 mounted on a bottom of the triangular board 1, and a light emitting unit 3 mounted on the triangular board 1 to emit light outward from the triangular board 1.

The triangular board 1 has an inside formed with a receiving chamber 10. A trapezoid reflective hood 100 is mounted in the receiving chamber 10 and located at a bottom of the receiving chamber 10. A diamond light permeable plate 101 is enclosed around the reflective hood 100. The reflective hood 100 and the light permeable plate 101 provide an optical diffusion effect to increase the warning distance of the reflective light source. A reflective board 11 is mounted on a back face of the triangular board 1.

The fixing seat 2 has an inside containing a permanent magnet 200 for attaching the fixing seat 2 to a magnetic object, such as the steel plate of a car or the like. The fixing seat 2 is rotatable relative to the triangular board 1.

The light emitting unit 3 includes a triangular light emitting body 30 mounted in the receiving chamber 10 of the triangular board 1, a power supply 32 connected to the light emitting body 30 by electric wires 33 to provide an electric power to the light emitting body 30, and a circuit board 31 connected to the light emitting body 30 to control operation of connected to the light emitting body 30. The light emitting body 30 includes a plurality of light emitting members 300, such as light emitting diodes (LED). The circuit board 31 has a counter 310, such as a 555 counter. The power supply 32 has an indicator lamp 320 to indicate the working state of the power supply 32.

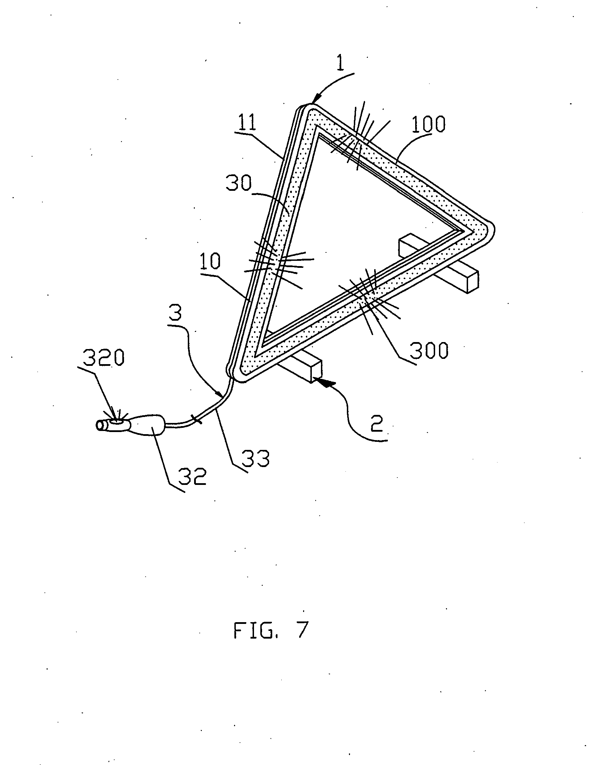

As shown in Fig. 7, when the car breaks down, the fixing seat 2 is attached to the trunk or roof of the car by the attractive force of the permanent magnet 200 to attach the triangular board 1 to the car. At this time, the position of the triangular board 1 can be changed by moving the fixing seat 2. Then, the power supply 32 provides an electric power to the light emitting body 30 so that the light emitting members 300 of the light emitting body 30 emit light outward from the triangular board 1 to provide a warning effect to other drivers. At this time, the circuit board 31 drives the light emitting members 300 of the light emitting body 30 to blink successively by provision of the counter 310 of the circuit board 31. In addition, the indicator lamp 320 indicates the working state of the power supply 32. In addition, the reflective hood 100 and the light permeable plate 101 provide an optical diffusion effect to reflect the light source from the light emitting body 30 so as to increase the warning distance of the warning device.

Accordingly, the light emitting members 300 of the light emitting body 30 emit light outward from the triangular board 1 to provide an optical warning effect. In addition, the circuit board 31 drives the light emitting members 300 of the light emitting body 30 to blink successively by provision of the counter 310 of the circuit board 31, thereby enhancing the warning effect. Further, the reflective hood 100 and the light permeable plate 101 provide an optical diffusion effect to reflect the light source from the light emitting body 30 so as to increase the warning distance of the warning device. Further, the triangular board 1 is attached to the trunk or roof of the car by the attractive force of the permanent magnet 200, so that the warning device is located at an outstanding position, thereby enhancing the warning effect.

## Claims

1. A warning device, comprising:
a triangular board (1);
**characterized by**
at least one fixing seat (2) mounted on a bottom of the triangular board; and
a light emitting unit (3) mounted on the triangular board to emit light outward from the triangular board.

2. The warning device in accordance with claim 1,
**characterized in that**
the triangular board has an inside formed with a receiving chamber (10), a trapezoid reflective hood (100) being mounted in the receiving chamber and located at a bottom of the receiving chamber, and a diamond light permeable plate (101) being enclosed around the reflective hood;
the fixing seat has an inside containing a permanent magnet (200) for attaching the fixing seat to a magnetic object; and
the light emitting unit includes a triangular light emitting body (30) mounted in the receiving chamber of the triangular board, a power supply (32) connected to the light emitting body by electric wires (33) to provide an electric power to the light emitting body, and a circuit board (31) connected to the light emitting body to control operation of connected to the light emitting body.

3. The warning device in accordance with claim 1 or claim 2,
**characterized by**
a reflective board mounted on a back face of the triangular board.

4. The warning device in accordance with claim 2,
**chracterized in that**
the reflective hood and the light permeable plate provide an optical diffusion effect to reflect the light source from the light emitting body.

5. The warning device in accordance with one of the proceeding claims
**characterized in that**
the fixing seat is rotatable relative to the triangular board.

6. The warning device in accordance with one of the preceding claims
**characterized in that**
the light emitting body includes a plurality of light emitting members (300).

7. The warning device in accordance with claim 6,
**characterized in that**
the circuit board has a counter (310) to drive the light emitting members of the light emitting body to blink successively.

8. The warning device in accordance with claim 2,
**characterized in that**
wherein the power supply has an indicator lamp to indicate the working state of the power supply.
